(19) Europäisches Patentamt
European Patent Office
Office européen des brevets

(11) **EP 4 561 200 A1**

(12) **EUROPEAN PATENT APPLICATION**
published in accordance with Art. 153(4) EPC

(43) Date of publication:
**28.05.2025 Bulletin 2025/22**

(21) Application number: **23843220.7**

(22) Date of filing: **04.07.2023**

(51) International Patent Classification (IPC):
**H04W 56/00** (2009.01)  **H04W 74/00** (2009.01)
**H04W 84/06** (2009.01)

(52) Cooperative Patent Classification (CPC):
**H04W 56/00; H04W 74/00; H04W 84/06**

(86) International application number:
**PCT/KR2023/009415**

(87) International publication number:
**WO 2024/019369 (25.01.2024 Gazette 2024/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.07.2022 KR 20220089087**

(71) Applicant: **LG Electronics Inc.**
**Yeongdeungpo-gu**
**Seoul 07336 (KR)**

(72) Inventors:
• **SHIN, Seokmin**
  **Seoul 06772 (KR)**
• **PARK, Haewook**
  **Seoul 06772 (KR)**

(74) Representative: **Plasseraud IP**
**104 Rue de Richelieu**
**CS92104**
**75080 Paris Cedex 02 (FR)**

(54) **METHOD AND APPARATUS FOR UPLINK TRANSMISSION AND RECEPTION IN WIRELESS COMMUNICATION SYSTEM**

(57)     Disclosed are a method and apparatus for uplink transmission and reception in a wireless communication system. The method according to an embodiment of the present disclosure may comprise the steps of: receiving, from a base station, configuration information providing information necessary for UE to access the wireless communication system via an NTN including a satellite, the configuration information including first information regarding a UE-specific TA value and second information regarding common TA; determining a TA value on the basis of the UE-specific TA value given by the first information and the common TA value derived from the second information; and performing uplink transmission at a timing determined on the basis of the TA value.

FIG.15

```
┌─────────────────────────────┐
│   Receive configuration     │
│ information related to NTN   │ ─── S1501
└─────────────────────────────┘
              │
              ▼
┌ ─ ─ ─ ─ ─ ─ ─ ─ ─ ─ ─ ─ ─ ─ ┐
   Receive control information   ─── S1502
└ ─ ─ ─ ─ ─ ─ ─ ─ ─ ─ ─ ─ ─ ─ ┘
              │
              ▼
┌─────────────────────────────┐
│ Transmit uplink signal/channel │ ─── S1503
└─────────────────────────────┘
```

EP 4 561 200 A1

EP 4 561 200 A1

**Description**

[Technical Field]

The present disclosure relates to a wireless communication system, and in more detail, relates to a method and an apparatus for transmitting and receiving an uplink channel/signal in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.
The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and an apparatus for transmitting and receiving an uplink channel/signal for accessing a wireless communication system through non-terrestrial network (NTN) access.
In addition, an additional technical object of the present disclosure is to provide a method and an apparatus for configuring a UE-specific TA value for calculating a timing advance (TA) for the NTN.
The technical objects to be achieved by the present disclosure are not limited to the above-described technical objects, and other technical objects which are not described herein will be clearly understood by those skilled in the pertinent art from the following description.

[Technical Solution]

A method performed by a user equipment (UE) in a wireless communication system according to an aspect of the present disclosure may include: receiving, from a base station, configuration information that provides information necessary for the UE to access the wireless communication system through a non-terrestrial network (NTN) including a satellite, wherein the configuration information includes first information for a UE-specific timing advance (TA) value and second information for a common TA; determining a TA value based on the UE-specific TA value given by the first information and a common TA value derived from the second information; and performing uplink transmission at a timing determined based on the TA value.
A method performed by a base station in a wireless communication system according to an additional aspect of the present disclosure may include: transmitting, to a user equipment (UE), configuration information that provides information necessary for the UE to access the wireless communication system through a non-terrestrial network (NTN) including a satellite, wherein the configuration information includes first information for a UE-specific timing advance (TA) value and second information for a common TA; and receiving, from the UE, an uplink transmission at a timing determined based on a TA value. The TA value may be determined based on the UE-specific TA value given by the first information and a common TA value derived from the second information.

[Technical Effects]

According to an embodiment of the present disclosure, there may be no problem in calculating a TA value by a UE without always providing serving-satellite-ephemeris-related related information/parameters (i.e., serving-satellite-ephemeris-related higher layer parameters).
In addition, according to an embodiment of the present disclosure, since serving-satellite-ephemeris-related related information/parameters (i.e., serving-satellite-ephemeris-related higher layer parameters) are not always provided, signaling overhead can be reduced.
Effects achievable by the present disclosure are not limited to the above-described effects, and other effects which are not described herein may be clearly understood by those skilled in the pertinent art from the following description.

[Brief Description of the Drawings]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates a non-terrestrial network to which the present disclosure can be applied.
FIG. 8 illustrates a cell of a non-terrestrial network to which the present disclosure can be applied.
FIG. 9 illustrates a scheduling offset of a non-terrestrial network to which the present disclosure can be applied.
FIG. 10 illustrates a UE-specific TA and a common TA in a non-terrestrial network to which the present disclosure can be applied.
FIG. 11 is a diagram for explaining orbital parameters in a non-terrestrial network to which the present disclosure can be applied.
FIG. 12 illustrates a random access procedure in a wireless communication system to which the present disclosure can be applied.
FIG. 13 illustrates a two-step random access procedure in a wireless communication system to which the present disclosure can be applied.
FIG. 14 illustrates a signaling method for an uplink transmission and reception method according to an embodiment of the present disclosure.
FIG. 15 is a diagram illustrating an operation of a UE for an uplink transmission and reception method according to an embodiment of the present disclosure.
FIG. 16 is a diagram illustrating an operation of a base station for an uplink transmission and reception method according to an embodiment of the present disclosure.
FIG. 17 illustrates a block diagram of a wireless communication device according to an embodiment of the present disclosure.

[Detailed Description]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.
In some cases, known structures and devices may be omitted or may be shown in a form of a block diagram based on a core function of each structure and device in order to prevent a concept of the present disclosure from being ambiguous.
In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.
In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point (AP), a Network(5G network), an AI (Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC (Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11 (Wi-Fi), IEEE 802.16(WiMAX), IEEE 802-20, E-UTRA(Evolved UTRA), etc. UTRA is a part of a UMTS (Universal Mobile Telecommunications System) . 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211 (physical channels and modulation), TS 38.212(multiplexing and channel coding), TS 38.213(physical layer procedures for control), TS 38.214 (physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal

- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

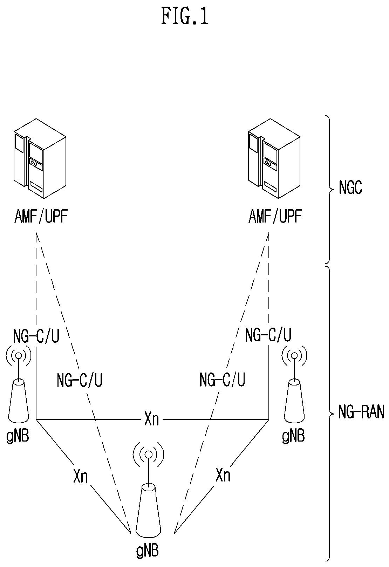

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

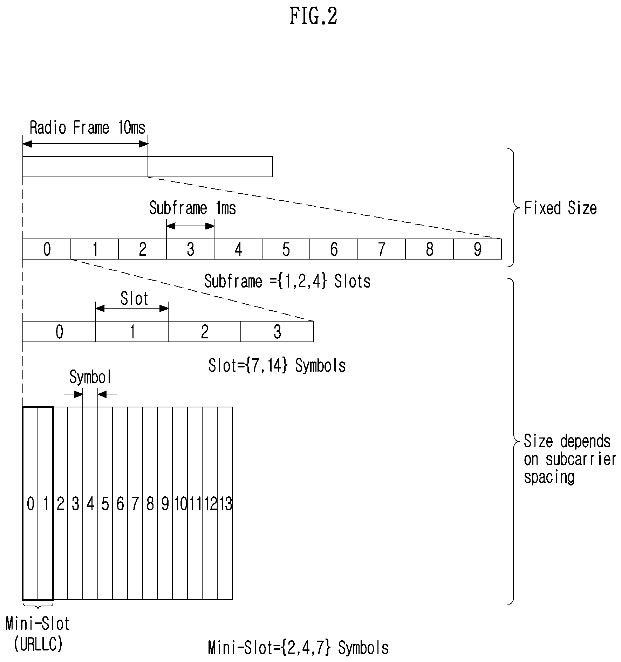

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu} \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - | 60, 120, |
| | 52600MHz | 240kHz |

Regarding a frame structure in an NR system, a size of a variety of fields in a time domain is expresses as a multiple of a time unit of $T_c=1/(\Delta f_{max} \cdot N_f)$. Here, $\Delta f_{max}$ is 480.103 Hz and $N_f$ is 4096. Downlink and uplink transmission is configured (organized) with a radio frame having a duration of $T_f=1/(\Delta f_{max} N_f/100) \cdot T_c=10$ms. Here, a radio frame is configured with 10 subframes having a duration of $T_{sf}=(\Delta f_{max} N_f/1000) \cdot T_c=1$ms, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration $\mu$, slots are numbered in an increasing order of $n_s^{\mu} \in \{0,..., N_{slot}^{subframe,\mu}-1\}$ in a subframe and are numbered in an increasing order of $n_{s,f}^{\mu} \in \{0, ..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu} N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |

(continued)

| μ | $N_{symb}^{slot}$ | $N_{slot}^{frame,\mu}$ | $N_{slot}^{subframe,\mu}$ |
|---|---|---|---|
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on μ=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

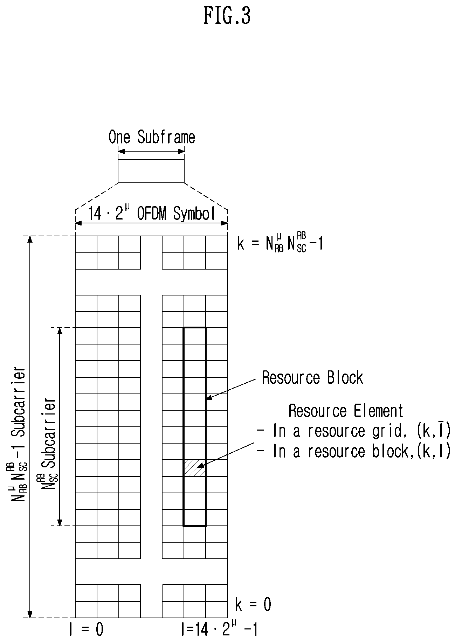

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \le N_{RB}^{max,\mu}$. The $N_{RB}^{max,\mu}$ represents a maximum transmission bandwidth, which may be different between an uplink and a downlink as well as between numerologies. In this case, one resource grid may be configured per μ and antenna port p. Each element of a resource grid for μ and an antenna port p is referred to as a resource element and is uniquely identified by an index pair (k,l'). Here, $k=0,..., N_{RB}^{\mu}N_{sc}^{RB}-1$ is an index in a frequency domain and $l'=0,..., 2^{\mu}N_{symb}^{(\mu)}-1$ refers to a position of a symbol in a subframe. When referring to a resource element in a slot, an index pair (k,l) is used. Here, $l=0,..., N_{symb}^{\mu}-1$. A resource element (k,l') for μ and an antenna port p corresponds to a complex value, $a_{k,l'}^{(p,\mu)}$. When there is no risk of confusion or when a specific antenna port or numerology is not specified, indexes p and μ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radiofrequency channel number).

Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{\mu}$ and a resource element (k,l) for a subcarrier spacing configuration μ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A.

Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

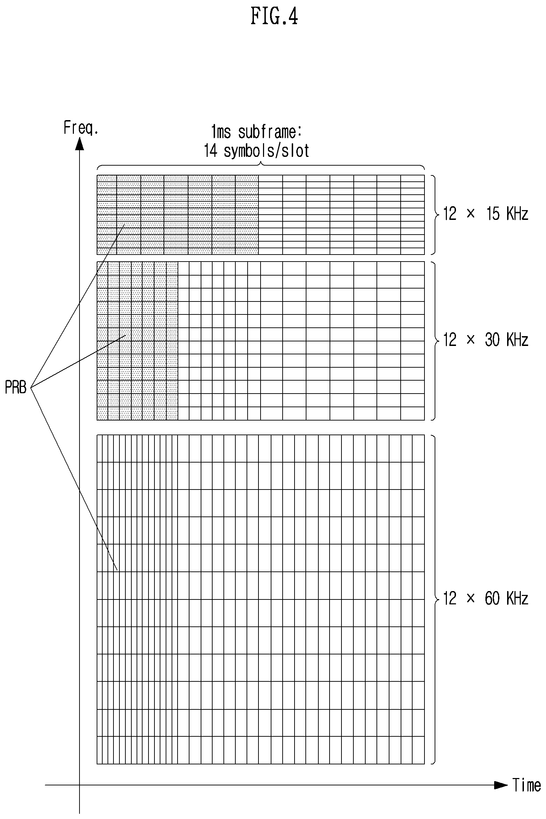

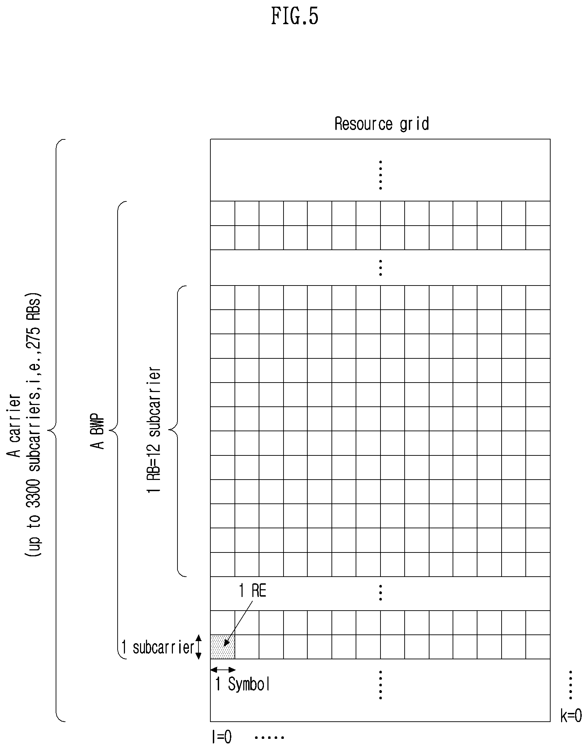

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE (Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

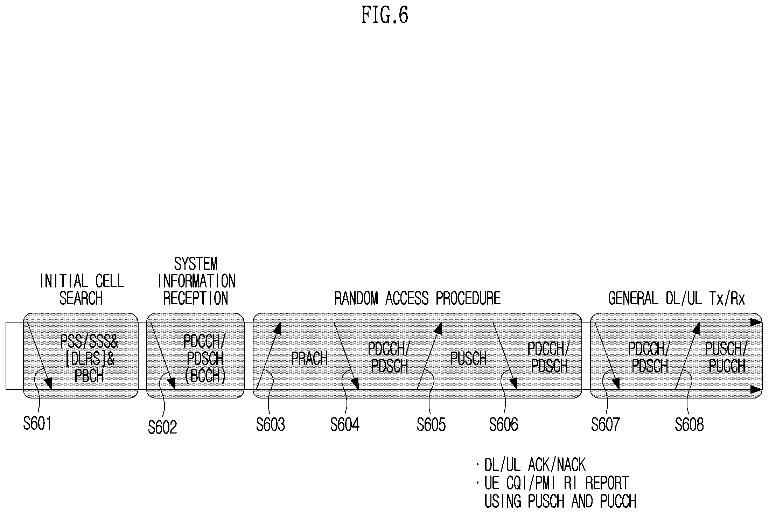

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block) -PRB (physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Non-terrestrial network (NTN) operation

In order to secure wider coverage or provide wireless communication services in places where it is not easy to install wireless communication base stations, the use of NR non-terrestrial network (NTN) or LTE NTN service is being considered. While existing terrestrial network (TN) services such as NR and LTE services installed base stations on the ground to provide wireless communication services to UEs, NTN service refers to providing wireless communication services to UEs by installing base stations on non-ground locations such as artificial satellites (geostationary Earth Orbit (GEO) satellites, low-Earth Orbit (LEO) satellites, medium-Earth Orbit (MEO) satellites, etc.), airplanes, unmanned aerial vehicles, and drones instead of installing base stations on the ground. Here, scenarios such as HAPS (high altitude platform) and ATG (air to ground) are also included.

(Rel-17/18) For NTN services, FDD is mainly considered (but TDD is not completely excluded) and it is assumed that a UE has global navigation satellite system (GNSS) capability.

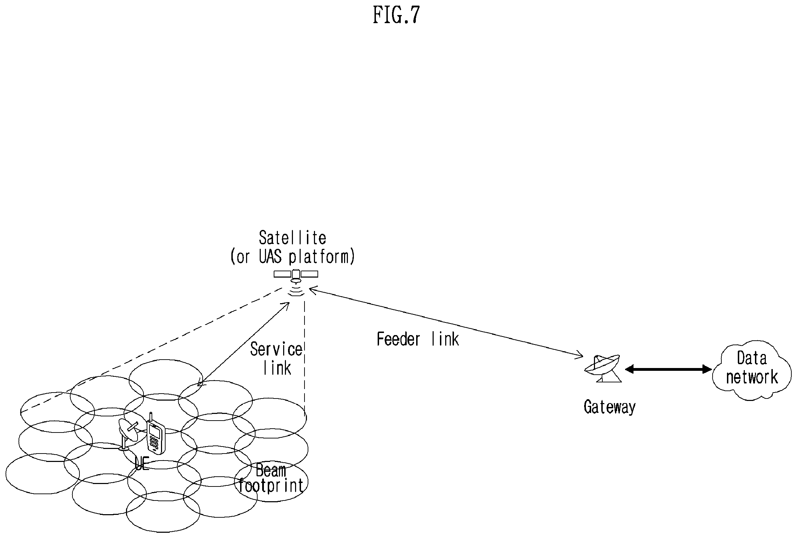

FIG. 7 illustrates a non-terrestrial network to which the present disclosure can be applied.

Depending on the characteristics of a payload of an NTN platform (especially, satellite), it can be largely divided into a transparent payload (see Fig. 7) and a regenerative payload. In the case of a transparent payload, a satellite (or unmanned aircraft system (UAS) platform) performs roles such as radio frequency filtering, frequency conversion and amplification. Therefore, the waveform signal of the transmission payload does not change.

On the other hand, for a regenerative payload, a satellite (or UAS platform) performs roles of radio frequency filtering, frequency conversion and amplification, as well as demodulation/decoding, switching and/or routing, and coding/modulation. Therefore, all or part of a base station functions can be considered to be onboard the satellite.

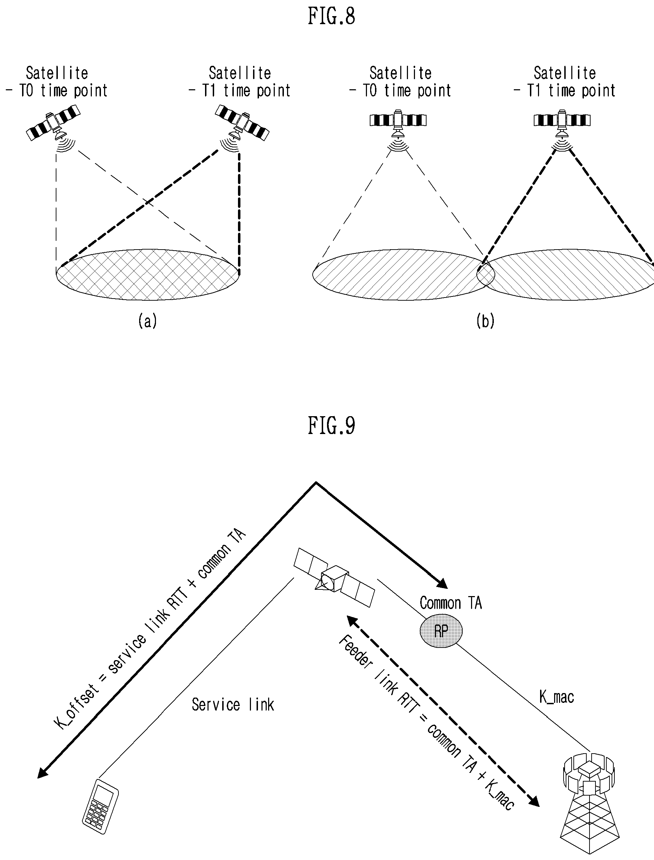

FIG. 8 illustrates a cell of a non-terrestrial network to which the present disclosure can be applied.

Referring to FIG. 8, depending on a type of a cell supported by a satellite, it can be divided into an earth fixed cell of FIG. 8(a) and an earth moving cell of FIG. 8(b). In the case of an earth fixed cell, it means that the cell is maintained permanently or for a specific service period within a specific location on the earth's surface (of the earth) based on the beam steering function of the satellite. In the case of an earth moving cell, it means that the cell within the earth's surface continuously moves by serving with a fixed beam without using the beam steering function of the satellite.

As shown in Table 6, different types of satellites (or UAS platforms) may exist.

Table 6 illustrates the types of NTN platform.

[Table 6]

| Platforms | Altitude range | Orbit | Typical beam footpri nt size |
|---|---|---|---|
| Low-Earth Orbit (LEO) satellite | 300 - 1500 km | Circular around the earth | 100 - 1000 km |
| Medium-Earth Orbit (MEO) satellite | 7000 - 25000 km | | 100 - 1000 km |
| Geostationa ry Earth Orbit (GEO) satellite | 35 786 km | notional station keeping position fixed in terms of elevation/azimuth with respect to a given earth point | 200 - 3500 km |
| UAS platform (including HAPS) | 8 - 50 km (20 km for HAPS) | | 5 - 200 km |
| High Elliptical Orbit (HEO) satellite | 400 - 50000 km | Elliptical around the earth | 200 - 3500 km |

Typically, a GEO satellite and an UAS are used to provide continental, regional or local service. In addition, a constellation of LEO and MEO is used to provide services in both Northern and Southern hemispheres. In some case, the constellation can even provide global coverage including polar regions. For the later, this requires appropriate orbit inclination, sufficient beams generated and inter-satellite links.

Table 7 illustrates a reference scenario.

[Table 7]

| | Transparent satellite | Regenerative satellite |
|---|---|---|
| GEO based non-terrestrial access network | Scenario A | Scenario B |

(continued)

|  | Transparent satellite | Regenerative satellite |
|---|---|---|
| LEO based non-terrestrial access network: steerable beams | Scenario C1 | Scenario D1 |
| LEO based non-terrestrial access network: the beams move with the satellite | Scenario C2 | Scenario D2 |

Table 8 illustrates reference scenario parameters.

[Table 8]

| Scenarios | GEO based non-terrestrial access network (Scenario A and B) | LEO based non-terrestrial access network (Scenario C & D) |
|---|---|---|
| Orbit type | notional station keeping position fixed in terms of elevation/azimu th with respect to a given earth point | circular orbiting around the earth |
| Altitude | 35,786 km | 600 km<br>1,200 km |
| Max beam foot print size (edge to edge) regardless of the elevation angle | 3500 km (Note 5) | 1000 km |
| Min Elevation angle for both sat-gateway and user equipment | 10° for service link and 10° for feeder link | 10° for service link and<br>10° for feeder link |
| Max distance between satellite and user equipment at min elevation angle | 40,581 km | 1,932 km (600 km altitude)<br>3,131 km (1,200 km altitude) |
| Max Round Trip Delay (propagation delay only) | Scenario A: 541.46 ms (service and feeder links)<br><br>Scenario B: 270.73 ms (service link only) | Scenario C: (transparent payload: service and feeder links)<br>- 25.77 ms (600km)<br>- 41.77 ms (1200km)<br>Scenario D: (regenerative payload: service link only)<br>- 12.89 ms (600km)<br>- 20.89 ms (1200km) |

As described above, in order to effectively operate sm NTN with very long an RTT, scheduling offsets K_offset and K_mac were introduced. FIG. 9 illustrates a scheduling offset of a non-terrestrial network to which the present disclosure can be applied.

K_offset is an offset value that means a round trip time (RTT) of a uplink time synchronization reference point (RP). This means a sum of a service link RTT and a common TA (if indicated).

K_mac is an offset value that means an RTT between an RP and a base station.

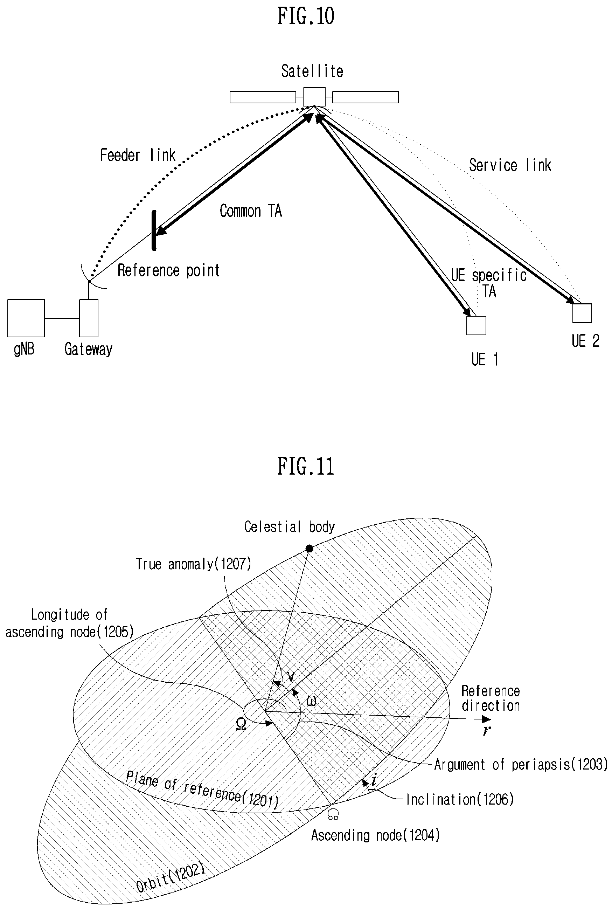

FIG. 10 illustrates a UE-specific TA and a common TA in a non-terrestrial network to which the present disclosure can be applied.

Referring to FIG. 10, in Rel-17 NTN, based on a GNSS capability of a UE and a base station indication information (e.g., ephemeris information), the UE can calculate a TA by itself, which is referred to as a UE-specific TA. In addition, the TA calculated based on the common TA parameters indicated by the base station can be referred to as a common TA, and the final TA is calculated based on this according to the provisions of TS 38.211 below.

Transmission in uplink frame number i from a UE must start $T_{TA}=(N_{TA}+N_{TA,offset}+N_{TA,adj}^{common}+N_{TA,adj}^{UE})T_c$ before the start of the corresponding downlink frame from the UE.

Here, $N_{TA}$ and $N_{TA,offset}$ are given by TS 38.213, section 4.2, except for msgA transmission on a PUSCH (in which case $N_{TA}=0$ is used).

In addition, $N_{TA,adj}^{common}$ given by TS 38.213, section 4.2, if configured, is derived from higher layer parameters TACommon, TACommonDrift and TACommonDriftVariation, otherwise $N_{TA,adj}^{common}=0$.

In addition, $N_{TA,adj}^{UE}$ given by TS 38.213 section 4.2, if configured, is computed by a UE based on the serving-satellite-ephemeris-related higher layer parameters and a UE location, otherwise $N_{TA,adj}^{UE}=0$.

Two ephemeris formats are supported in 3GPP Rel-17, as follows:

i) Position and velocity state vector ephemeris format: It consists of fields for position (x, y, z) (m) and fields for velocity (vx, vy, vz) (m/s).
ii) Orbital parameter ephemeris format is described with reference to FIG. 11 below.

FIG. 11 is a diagram for explaining orbital parameters in a non-terrestrial network to which the present disclosure can be applied.

Referring to FIG. 11, the orbit parameter ephemeris format is a method of representing a satellite's orbit using the following six elements.

i) Semi-major axis "a" [m]: Since the satellite orbit is elliptical, it represents half of the major axis in the elliptical orbit.
ii) Eccentricity "e": The elliptical orbit is 0<e<1.
iii) Argument of periapsis "ω" [rad] (1203): The angle from the periapsis (the point where an object is closest to the center of the orbit) to the ascending node (1204), which determines the direction of the ellipse in the orbital plane (1202).
iv) Longitude of ascending node "Ω" [rad] (1205): The ascending node (1204) refers to the point where the orbit passes from below to above the reference plane (1201), and the angle measured counterclockwise from the reference point to the ascending node (1204) is called the longitude of the ascending node. In the solar system, the reference point is the vernal equinox.
v) Orbital inclination "i" [rad] (1206): It means the degree of inclination of the ellipse with respect to the reference plane (1201), and is measured as the angle between the orbital plane (1202) and the reference plane (1201) at the ascending node (the point where the orbit passes the reference plane (1201) from below to above) (1204).
vi) Mean anomaly "M0" = M(t0) [rad] (at epoch time t0 [JD]): It is an angle that changes continuously over time, which is mathematically convenient, but the angle does not correspond to the geometric angle. The true anomaly "v" (1207) can also be used as this value, and the true anomaly value represents the angle formed by the orbital periapsis and the orbiting object at any point in time, so the angle corresponds to the geometric angle.

In satellite-based communications, circular polarization is mainly used to increase the straightness of radio waves, and in Rel-17, a system information block (SIB) signaling was introduced to the terminal to indicate what polarization information the satellite uses. The polarization types of the signaling include linear, right-hand circular polarization (RHCP), and left-hand circular polarization (LHCP).

Random access operation and related operation

When there is no PUSCH transmission resource (i.e., Uplink Grant) allocated by the base station, a terminal may perform a random access operation. A random access of the NR system may be initiated 1) when a terminal requests or resumes an RRC connection, 2) when a terminal performs handover or secondary cell group (SCG) addition (i.e., SCG addition) to an adjacent cell, 3) when transmitting a scheduling request to a base station, 4) when a base station indicates a random access of a terminal with a PDCCH order, 5) when a beam failure or RRC connection failure is detected.

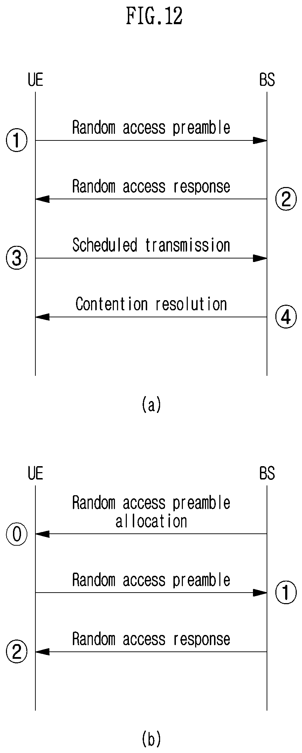

FIG. 12 illustrates a random access procedure in a wireless communication system to which the present disclosure can be applied. FIG. 12(a) illustrates a contention-based random access procedure, and FIG. 12(b) illustrates a dedicated random access procedure.

Referring to FIG. 12(a), a contention-based random access process includes the following four steps. Hereinafter, messages transmitted in steps 1 to 4 may be referred to as messages (Msg) 1 to 4, respectively.

- Step 1: A terminal transmits a random access channel (RACH) preamble through a physical random access channel (PRACH).
- Step 2: A terminal receives a random access response (RAR) through a downlink shared channel (DL-SCH) from a base station.
- Step 3: A terminal transmits a Layer 2 / Layer 3 message to a base station through an uplink shared channel (UL-SCH).
- Step 4: A terminal receives a contention resolution message from a base station through a DL-SCH.

A terminal may receive information on a random access from a base station through system information.

If a random access is required, a terminal transmits a RACH preamble to a base station as in step 1. A base station may distinguish each random access preamble through a time/frequency resource (i.e., RACH Occasion (RO)) and a random access preamble index (PI) in which a random access preamble is transmitted.

When a base station receives a random access preamble from a terminal, the base station transmits a random access response (RAR) message to the terminal as in step 2. For reception of a random access response message, within a preconfigured time window (e.g., ra-ResponseWindow), a terminal monitors a CRC-masked L1/L2 control channel (PDCCH) with a RA-RNTI (Random Access-RNTI) including scheduling information for the random access response message. A PDCCH masked with a RA-RNTI may be transmitted only through a common search space. When receiving a scheduling signal masked by a RA-RNTI, a terminal may receive a random access response message from a PDSCH indicated by the scheduling information. Thereafter, a terminal checks whether there is random access response information indicated to itself in the random access response message. Whether or not random access response information indicated to itself exists may be checked by whether a random access preamble ID (RAPID) for a preamble transmitted by the terminal exists. An index of a preamble transmitted by a terminal and a RAPID may be the same. Random access response information includes a corresponding random access preamble index, timing offset information for UL synchronization (e.g., Timing Advance Command (TAC)), UL scheduling information for message 3 transmission (e.g., UL grant) and terminal temporary identification information (e.g., TC-RNTI (Temporary-C-RNTI)).

A terminal receiving random access response information transmits UL-SCH (Shared Channel) data (message 3) through a PUSCH according to L scheduling information and a timing offset value, as in step 3. A time and frequency resource to which a PUSCH carrying message 3 is mapped/transmitted is defined as PO (PUSCH Occasion). Message 3 may include an ID of a terminal (or a global ID of a terminal) . Alternatively, message 3 may include RRC connection request related information (e.g., RRCSetupRequest message) for initial access. In addition, message 3 may include a buffer status report (BSR) on an amount of data available for transmission by a terminal.

After receiving UL-SCH data, as in step 4, a base station transmits a contention resolution message (message 4) to a terminal. When a terminal receives a contention resolution message and a contention is resolved successfully, a TC-RNTI is changed to a C-RNTI. Message 4 may include an ID of a terminal and/or RRC connection related information (e.g., an RRCSetup message). If information transmitted through message 3 and information received through message 4 do not match, or if message 4 is not received for a certain duration of time, a terminal may retransmit message 3 as a contention resolution has failed.

Referring to FIG. 12(b), a dedicated random access process includes the following three steps. Hereinafter, messages transmitted in steps 0 to 2 may be referred to as messages (Msg) 0 to 2, respectively. A dedicated random access procedure may be triggered using a PDCCH (hereinafter referred to as a PDCCH order) for which a base station instructs to transmit a RACH preamble.

- Step 0: A base station allocates a RACH preamble through dedicated signaling to a terminal.
- Step 1: A terminal transmits a RACH preamble through a PRACH.
- Step 2: A terminal receives a random access response (RAR) through a DL-SCH from a base station.

The operations of steps 1 and 2 of a dedicated random access procedure may be the same as steps 1 and 2 of a contention-based random access procedure.

In NR, DCI format 1_0 is used to initiate a non-contention-based random access procedure with a PDCCH order. DCI format 1_0 is used to schedule a PDSCH in one DL cell. Meanwhile, when a CRC (Cyclic Redundancy Check) of DCI format 1_0 is scrambled with a C-RNTI and all bit values of the "Frequency domain resource assignment" field are 1, DCI format 1_0 is used as a PDCCH order indicating a random access procedure. do. In this case, fields of DCI format 1_0 are configured as follows.

- RA preamble index: 6 bits
- UL / SUL (Supplementary UL) indicator: 1 bit. When bit values of a RA preamble index are not all 0 and SUL is configured in a cell for a terminal, it indicates a UL carrier on which a PRACH is transmitted in a cell. Otherwise, it is reserved.
- SSB (Synchronization Signal / Physical Broadcast Channel) index: 6 bits. When all bit values of a RA preamble index are not 0, it indicates an SSB used to determine a RACH opportunity for PRACH transmission. Otherwise, it is reserved.
- PRACH mask index: 4 bits. When all bit values of a RA preamble index are not 0, it indicates a RACH opportunity associated with an SSB indicated by an SSB index. Otherwise, it is reserved.
- Reserved: 10 bits

When DCI format 1_0 does not correspond to a PDCCH order, DCI format 1_0 includes fields used to schedule a PDSCH (e.g., TDRA (Time domain resource assignment), MCS (Modulation and Coding Scheme), HARQ process number, PDSCH-to-HARQ_feedback timing indicator, etc.).

In the NR system, lower latency than the existing system may be required. In addition, if a random access process occurs in an U-band, the random access process is terminated and contention is resolved only when a terminal and a base station sequentially succeed in an LBT in both a 4-step random access process. If an LBT fails in even one step of a 4-step random access process, resource efficiency decreases and latency increases. Specifically, if an LBT fails in a scheduling/transmission process associated with message 2 or message 3, a decrease in resource efficiency and an increase in latency may occur significantly. Even a random access process in an L-band may require a low-latency random access process in various scenarios of an NR system. Accordingly, a 2-step random access procedure may be performed on an L-band as well.

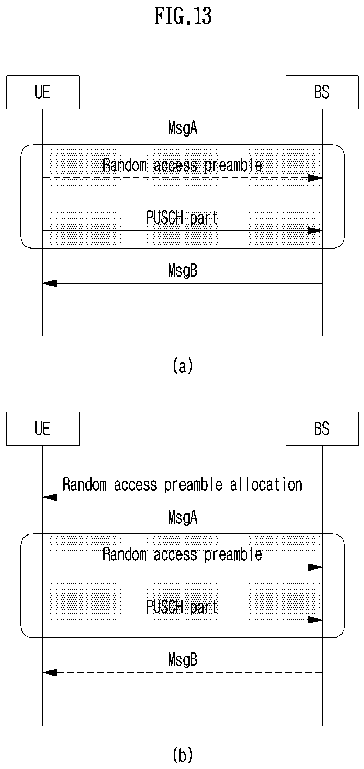

FIG. 13 illustrates a two-step random access procedure in a wireless communication system to which the present disclosure can be applied.

As shown in FIG. 13(a), a 2-step random access process may be configured in two steps of uplink signal transmission (referred to as message A, corresponding to PRACH preamble + Msg3 PUSCH) from a terminal to a base station and downlink signal transmission (referred to as message B, and corresponding to RAR + Msg4 PDSCH) from a base station to a terminal.

In addition, in a non-contention random access process, a random access preamble and a PUSCH part may be transmitted together as shown in FIG. 13(b).

Although not shown in FIG. 13, a PDCCH for scheduling message B may be transmitted from a base station to a terminal, which may be referred to as Msg. B PDCCH.

Uplink/downlink signal transmission and reception method in NTN

The above-described contents (NR frame structure, NTN system, etc.) may be applied in combination with the methods proposed in the present disclosure to be described later, or may be supplemented to clarify technical characteristics of the methods proposed in the present disclosure.

In addition, the methods to be described later are related to uplink transmission, which may be equivalently applied to a downlink signal transmission method in the above-described NR system or LTE system. It may be modified or replaced to fit terms, expressions, structures, etc. defined in each system so that the technical idea proposed in the present disclosure can be implemented in a corresponding system.

In order to secure wider coverage or to provide a wireless communication service in a place where it is not easy to install a wireless communication base station, a use of NR non-terrestrial network (NTN) or LTE NTN service is being considered. Existing terrestrial network (TN) services such as NR and LTE services provided wireless communication services to UEs by installing corresponding base stations on the ground. On the other hand, without installing a base station on the ground, NTN service means providing wireless communication services to UEs by installing them in places not located on the ground such as artificial satellites (geostationary orbit, low orbit, medium orbit, etc.), airplanes, unmanned aerial vehicles, drones, etc.

Frequency bands considered for NR NTN service are mainly considered the 2 GHz band (S-band: 2-4 GHz) in the band below 6 GHz, the DL 20 GHz, UL 30 GHz band (Ka-Band: 26.5~40GHz) in the band above 6 GHz.

The NR NTN service is largely divided into two methods, which are a transparent payload method as shown in FIG. 7 and a regenerative payload method as shown in FIG. 8. Briefly, a regenerative payload method means that a satellite itself becomes a gNB, and a transparent payload method means that a satellite transmits a corresponding signal when receiving a payload from a terrestrial base station.

In the existing TN (e.g., NR or LTE), since a UE moves in a cell, even if a distance to a base station changes, when a UE transmits a PRACH preamble, the preamble is received to a base station within a time duration of a specific RACH occasion (RO) (or PRACH occasion). In addition, as a timing advance (TA) value for a UE to transmit a UL signal/channel, it is configured with an initial TA value and a TA offset. These values are values indicated by a base station and correspond to TA values that can be expressed in a cell coverage range of the corresponding base station. Meanwhile, in a case of a PDCCH order, if a base station indicates DCI for PDCCH order, a UE transmits a PRACH preamble and performs UL signal/channel transmission using a TA value (i.e., initial TA) indicated through a random access response (RAR) transmitted from a base station.

On the other hand, in NTN, a distance between a satellite and a UE is changed due to a movement of a satellite regardless of a movement of a UE. In order to overcome this, it is possible to find out a location of a UE from a global navigation satellite system (GNSS), and a UE can calculate a UE-specific TA, which is a round trip delay (RTD) between a UE and a satellite, through orbit information of a satellite indicated by a base station. Here, when a UE transmits a PRACH preamble on the selected RO (i.e., PRACH occasion), the UE-specific TA is configured so that a satellite (or gNB) can receive the PRACH preamble within a time duration of the corresponding RO (i.e., PRACH occasion). In a case that a PRACH preamble transmitted from the RO selected by a UE is transmitted by applying only a UE-specific TA, when the corresponding PRACH preamble arrives at a satellite (or gNB) and is received by a satellite, the PRACH preamble is received with a delay from a reference time of the RO. Accordingly, an initial TA value may be indicated by the corresponding delayed value in an RAR transmitted from a base station. Additionally, a common TA corresponds to an RTD between a gNB on the ground (or a reference point, where the reference point is where the DL and UL frame boundaries align) and a satellite, and it may be defined/configured so that a base station transmits to a UE.

Additionally, an NTN may configure a TA value to UE specific TA + common TA (if provided) before Msg 1/Msg A transmission. Here, the UE-specific TA may be referred to as a round trip delay (RTD) between a UE and a satellite calculated by a UE itself as described above.

As described above, NR supports multiple numerologies (or subcarrier spacing (SCS)) to support various 5G services. For example, when the SCS is 15 kHz, it supports a wide area in traditional cellular bands. Also, when the SCS is 30 kHz/60 kHz, it supports dense-urban, lower latency, and wider carrier bandwidth. In addition, when the SCS is 60 kHz or higher, it supports a bandwidth greater than 24.25 GHz to overcome phase noise.

The NR frequency band is defined by two types of frequency ranges (FR1, FR2). FR1 and FR2 can be configured as shown in Table 2 above. In addition, FR2 can mean millimeter wave (mmW).

Meanwhile, when the repetitive transmission techniques introduced for uplink coverage enhancement of the existing NR system are applied in the NR NTN, additional UE/base station operations may be required. To this end, the present disclosure proposes a method for configuring/indicating a UE-specific timing advance (TA) according to a specific situation.

According to the current 3GPP Rel-17 NR NTN (or IoT NTN) standard, in order to enable a UE to calculate a UE-specific TA by itself, a base station provides satellite orbit information (i.e., ephemeris information parameter(s)) to the UE via higher layer signaling (e.g., system information block (SIB) 19). However, in this case, since the UE distinguishes whether a cell is an NTN cell or a TN cell depending on whether the satellite orbit information is provided, the base station always provides satellite orbit information in the case of an NTN cell, and does not provide satellite orbit information in the case of a TN cell. The related standard is stipulated in TS 38.211 and is as follows.

Downlink, uplink and sidelink transmissions are organized into radio frames having a duration of $T_f = (\Delta f_{max} N_f /100) \cdot T_c = 10$ms. Here, the sizes of various fields in a time domain are expressed as multiples of a time unit of $T_c = 1/(\Delta f_{max} \cdot N_f)$, where $\Delta f_{max} = 480 \cdot 10^3$ Hz and $N_f = 4096$. Here, a radio frame is organized into 10 subframes each having a duration of $T_{sf} = (\Delta f_{max} N_f /1000) \cdot T_c = 1$ms. The number of consecutive OFDM symbols per subframe is $N_{symb}^{subframe,\mu} = N_{symb}^{slot} N_{slot}^{subframe,\mu}$. Each frame is divided into two half-frames of five subframes of equal size, half-frame 0 consists of subframes 0-4, half-frame 1 consists of subframes 5-9. In this case, there can be one set of frames for uplink and one set of frames for downlink. Furthermore, transmission in uplink frame number i from a UE shall start $T_{TA} = (N_{TA} + N_{TA,offset} + N_{TA,adj}^{common} + N_{TA,adj}^{UE}) T_c$ earlier than a start of the corresponding downlink frame from the UE.

Here, $N_{TA}$ and $N_{TA,offset}$ are given by TS 38.213, section 4.2, except for msgA transmission on PUSCH (in which case $N_{TA} = 0$ is used).

Additionally, $N_{TA,adj}^{common}$ given by TS 38.213 Section 4.2, if configured, is derived from higher layer parameters TACommon, TACommonDrift and TACommonDriftVariation, otherwise $N_{TA,adj}^{common} = 0$. Here, the TACommon parameter is a common TA value controlled by a network and may include a timing offset deemed necessary by the network. The TACommonDrift parameter indicates a drift rate of the common TA. The TACommonDriftVariation parameter indicates a drift rate variation of the common TA.

In addition, $N_{TA,adj}^{UE}$ given by TS 38.213 section 4.2, if configured, is computed by a UE based on serving-satellite-ephemeris-related upper higher parameters and a UE location, otherwise $N_{TA,adj}^{UE} = 0$.

Table 9 illustrates the NTN-Config information element (IE). NTN-Config provides a UE with the information/parameter(s) required to access NR via NTN access.

【Table 9】

```
NTN-Config-r17 ::=              SEQUENCE {
    epochTime-r17              EpochTime-r17
OPTIONAL,  -- Need R
    ntn-UlSyncValidityDuration-r17 ENUMERATED{ s5, s10, s15, s20, s25, s30, s35,
                               s40, s45, s50, s55, s60, s120, s180, s240, s900}
OPTIONAL,  -- Cond SIB19
    cellSpecificKoffset-r17    INTEGER(1..1023)
OPTIONAL,  -- Need R
    kmac-r17                   INTEGER(1..512)
OPTIONAL,  -- Need R
```

```
    ta-Info-r17                        TA-Info-r17
OPTIONAL,  -- Need R
    ntn-PolarizationDL-r17        ENUMERATED {rhcp,lhcp,linear}
OPTIONAL,  -- Need R
    ntn-PolarizationUL-r17        ENUMERATED {rhcp,lhcp,linear}
OPTIONAL,  -- Need R
    ephemerisInfo-r17             EphemerisInfo-r17
OPTIONAL,  -- Need R
    ta-Report-r17                 ENUMERATED {enabled}
OPTIONAL,  -- Need R
    ...
}

EpochTime-r17 ::=           SEQUENCE {
    sfn-r17                   INTEGER(0..1023),
    subFrameNR-r17            INTEGER(0..9)
}

TA-Info-r17 ::=             SEQUENCE  {
    ta-Common-r17             INTEGER(0..66485757),
    ta-CommonDrift-r17        INTEGER(-257303..257303)
OPTIONAL,  -- Need R
    ta-CommonDriftVariant-r17   INTEGER(0..28949)
OPTIONAL  -- Need R
}
```

Referring to Table 9, the parameter (ephemerisInfo) for ephemeris information provides satellite ephemeris in the position and velocity state vector format or the orbital parameter format.

The parameter (epochTime) for epoch time indicates an epoch time of NTN assistance information. If explicitly provided via SIB or dedicated signaling, the epochTime is a start time of a DL subframe and is indicated by a subframe number signaled together with the SFN and assistance information. For a serving cell, the sfn field indicates a current SFN or a next SFN after a frame in which a message indicating the epochTime was received. For a neighboring cell, the sfn indicates an SFN closest to a frame in which a message indicating the epochTime was received. A reference point for the epoch time of the serving or neighboring NTN payload ephemeris and common TA parameters is a UL time synchronization reference point.

The parameter for cell-specific K offset (cellSpecificKoffset) indicates a scheduling offset used for modified timing relationship for an NTN.

The parameter for K (kmac) indicates a scheduling offset provided by a network when downlink and uplink frame timing are not aligned at a base station. It is required for a UE operation and assumption regarding downlink configuration indicated by a MAC CE command in a PDSCH.

The parameter for NTN polarization of DL (ntn-PolarizationDL), if present, indicates polarization information for downlink transmission on a service link, including righthand circular polarization (RHCP) and left-hand circular polarization (LHCP).

The parameter for UL NTN polarization (ntn-PolarizationUL), if present, indicates a polarization for a uplink service link.

The parameter for UL synchronization validity duration (ntn-UlSyncValidityDuration) indicates a validity duration configured by a network for assistance information (i.e., serving and/or neighboring satellite ephemeris and common TA parameters) which indicates a maximum time interval (from epochTime) during which a UE can apply the assistance information without acquiring new assistance information.

The parameter for common TA (ta-Common) indicates a common TA value controlled by a network, and may include a timing offset deemed necessary by the network.

The parameter for a drift rate variation of a common TA (ta-CommonDrift) indicates a drift rate variation of a common TA.

The parameter for TA reporting (ta-Report) indicates that reporting of a TA is enabled during random access due to RRC connection establishment or RRC connection resume and during RRC connection reestablishment when this field is included in SIB19.

In the above description, referring to a part related to a UE specific TA (i.e., $N_{TA,adjUE}$), for terrestrial network (TN) UEs, if the serving-satellite-ephemeris-related upper layer parameters are not provided from a base station, the behavior is defined to consider the UE specific TA as 0.

On the other hand, even in the case of NTN cells (or IoT NTN cells), in certain situations/cases, providing parameters related to satellite orbit information may be a signaling overhead for a base station. For example, assuming the case of IoT NTN cells using geostationary earth orbit (GEO) satellites, satellite orbit information hardly changes over time. In addition, since most of the UEs accessing the cell are low cost UEs, the processing time required for a UE to calculate a UE specific TA by itself may be considerable. As another example, in the case of a non-GNSS (non-Global Navigation Satellite System) capable UE accessing an NTN cell, or in the case of a low capable UE such as a RedCap (Reduced Capability) UE, it may be difficult for a UE to calculate a UE specific TA by itself due to a capability of the UE. Therefore, in such cases, it may be inefficient for a base station to periodically provide satellite orbit information related parameters, so the present disclosure proposes the following methods.

Embodiment: Even if it is an NTN cell, an operation of not providing satellite orbit information related parameters may be considered based on (considering) a UE capability and/or a satellite type. In other words, a base station may configure/indicate a UE not to perform an operation of calculating a UE specific TA using UE position and satellite orbit information.

However, in order to distinguish from a TN cell, an NTN base station may configure/indicate/provide a UE specific TA value (hereinafter, referred to as a default UE specific TA value for convenience of explanation) instead of providing satellite orbit information related parameters. Therefore, as a result, when satellite orbit information is not transmitted from a base station and only a default UE specific TA value is provided, an NTN UE may be configured/defined to receive a default UE specific TA value as a higher layer parameter (e.g., UEspecificTA) through higher layer signaling (e.g., SIB19, etc.) instead of calculating a UE specific TA and use it for calculating a total TA (i.e., $T_{TA}$). In other words, an NTN base station may provide either satellite orbit information related parameter(s) (i.e., serving-satellite-ephemeris-related higher layer parameters) or a UE specific TA value. When the satellite orbit information related parameter(s) are provided, a UE can calculate a UE specific TA value (i.e., $N_{TA,adj}^{UE}$) based on the satellite orbit information related parameter(s) and a UE location for calculating a total TA ($T_{TA}$). On the other hand, when a UE specific TA value (i.e., default UE specific TA) is provided, a UE can use the provided UE specific TA value for calculating a total TA ($T_{TA}$).

If the above proposed method is applied to TS 38.211, it can be applied as follows.

Downlink, uplink and sidelink transmissions are organized into radio frames having a duration of $T_f = (\Delta f_{max} N_f/100) \cdot T_c = 10$ms. Here, sizes of various fields in a time domain are expressed as multiples of a time unit of $T_c = 1/(\Delta f_{max} \cdot N_f)$, where $\Delta f_{max} = 480 \cdot 10^3$ Hz and $N_f = 4096$. Here, a radio frame is organized into 10 subframes each having a duration of $T_{sf} = (\Delta f_{max} N_f/1000) \cdot T_c = 1$ms. The number of consecutive OFDM symbols per subframe is $N_{symb}^{subframe,\mu} = N_{symb}^{slot} N_{slot}^{subframe,\mu}$. Each frame is divided into two half-frames of five subframes of equal size, half-frame 0 consists of subframes 0-4, half-frame 1 consists of subframes 5-9. In this case, there can be one set of frames for uplink and one set of frames for downlink. Furthermore, transmission in uplink frame number i from a UE shall start $T_{TA} = (N_{TA} + N_{TA,offset} + N_{TA,adj}^{common} + N_{TA,adj}^{UE}) T_c$ earlier than a start of the corresponding downlink frame from the UE.

Here, $N_{TA}$ and $N_{TA,offset}$ are given by TS 38.213, section 4.2, except for msgA transmission on PUSCH (in which case $N_{TA} = 0$ is used).

In addition, $N_{TA,adj}^{common}$ given by TS 38.213, section 4.2, if configured, is derived from higher layer parameters TACommon, TACommonDrift and TACommonDriftVariation, otherwise $N_{TA,adj}^{common} = 0$. Here, the TACommon parameter is a common TA value controlled by a network and may include a timing offset deemed necessary by a network. The TACommonDrift parameter indicates a drift rate of a common TA. The TACommonDriftVariation parameter indicates a drift rate variation of a common TA.

In addition, $N_{TA,adj}^{UE}$ given by TS 38.213, section 4.2, if configured, is computed by a UE based on serving-satellite-ephemeris-related higher layer parameters and a UE location.

Alternatively, $N_{TA,adj}^{UE}$ given by TS 38.213, section 4.2, if configured, is given by the higher layer parameter for a UE specific TA (e.g., UEspecificTA).

Otherwise, $N_{TA,adj}^{UE} = 0$.

Here, a virtual UE position for a base station to calculate a default UE specific TA can be configured/defined as an NTN cell center. Accordingly, when a base station commonly provides a value of a default UE specific TA to multiple UEs, each UE specific TA value may be slightly different depending on actual positions of UEs. Accordingly, a Total TA value configured (i.e., used) when transmitting a PRACH preamble during a RACH procedure (i.e., random access procedure) may be slightly different. However, when a base station receives a PRACH preamble and configures an appropriate closed loop TA (i.e., $N_{TA}$) for each UE (for example, through a random access response (RAR)), a UE can be configured to accurately obtain the Total TA when transmitting Msg. 3 PUSCH thereafter.

Meanwhile, as described above, an NTN base station may provide only one of satellite orbit information-related parameter(s) or a default UE specific TA value to a UE, but the NTN base station may also provide the default UE specific TA value and the satellite orbit information-related parameter(s) at the same time. In this case, the UE may be configured/defined to ignore (or prioritize) one of the default UE specific TA value and the satellite orbit information-related parameter(s). For example, if a default UE specific TA value and satellite orbit information-related parameter(s) are provided from an NTN base station at the same time, a UE may be configured to ignore the default UE specific TA and calculate a UE specific TA by itself using the satellite orbit information-related parameter(s) to calculate a total TA (i.e., $T_{TA}$) (i.e., the satellite orbit information-related parameter(s) have priority over the default UE specific TA value). Alternatively, conversely, if a default UE specific TA value and satellite orbit information-related parameter(s) are provided from an NTN base station at the same time, a UE may be configured to ignore the satellite orbit information-related parameter(s) and calculate total TA (i.e., $T_{TA}$) using the default UE specific TA (i.e., the default UE specific TA value has priority over the satellite orbit information-related parameter(s)).

Alternatively, when a default UE specific TA value and satellite orbit information-related parameter(s) are simultaneously provided from an NTN base station, the base station may directly configure/indicate which of the satellite orbit information-related parameter(s) and the default UE specific TA value the UE should use to calculate a total TA (i.e., TTA). In this case, the UE may be configured/defined to calculate/acquire a UE specific TA according to the configuration/indication of the base station and to calculate a total TA (i.e., TTA) using the value.

Meanwhile, when a base station provides a default value of the UE specific TA, an actual value may be transmitted for each cycle of transmitting the higher layer signaling (i.e., the cycle of the higher layer signaling (e.g., SIB19) in which satellite orbit information related parameter(s) and/or a default UE specific TA value is transmitted). For example, the default UE specific TA value may be provided whenever SIB19 is transmitted. However, in the case of an IoT NTN environment using GEO, since a satellite appears to be fixed and a UE hardly moves, the initially configured UE specific TA value may not change for a long time. Accordingly, a UE specific TA value is not transmitted every period (i.e., a period of the higher layer signaling (e.g., SIB19) in which the satellite orbit information related parameter(s) and/or the default UE specific TA value are transmitted), but instead, an actual default UE specific TA value may be provided only for a certain long period (i.e., a period longer than the higher layer signaling (e.g., SIB19) in which the satellite orbit information related parameter(s) and/or the default UE specific TA value are transmitted). And, it may be configured that in other periods (i.e., transmission periods (time points) other than the long period (time point) in a transmission period (time point) of the higher layer signaling (e.g., SIB19) in which the satellite orbit information related parameter(s) and/or the default UE specific TA value are transmitted), a difference value (or an offset value or a differential value, etc.) with respect to the previously transmitted value is provided. For example, also, the default UE specific TA value can be configured/indicated to tie (correspond to) an NTN platform type (e.g., if explicit indication is supported).

In addition, a new TA offset parameter may be introduced so as to have a similar result as configuring the default UE specific TA value. For example, if a new parameter (e.g., $N_{TA\_offset\_UEspecific}$) is introduced and a base station configures the corresponding parameter value, an effect of adding a specific offset to a UE specific TA value calculated by the base station can be obtained. In this case, the base station needs to modify and provide the satellite orbit information parameter(s) depending on how the offset value is configured. For example, if a new parameter (e.g., $N_{TA\_offset\_UEspecific}$) is provided, a UE can calculate the total TA as $T_{TA}=(N_{TA}+N_{TA,offset}+N_{TA\_offset\_UEspecific}+N_{TA,adj}^{common}+N_{TA,adj}^{UE})T_c$, and $N_{TA,adj}^{UE}$ can be calculated by a UE based on the satellite orbit information parameter(s) provided by a base station and a UE location as before, or determined as the default UE specific TA described above. The above newly introduced parameters can be updated by a base station (periodically or aperiodically), and can be updated based on SIB modification or MAC-CE/DCI. In addition, the parameters can be indicated/configured band-specifically (i.e. individually for each given band).

As another example, the existing defined $N_{TA,offset}$ may be newly defined in the standard specification or may be newly interpreted and used by a UE in certain cases. That is, if a base station configures/indicates that "open loop TA" is disabled, a UE may configure the existing $N_{TA,offset}$ to be interpreted as a default UE specific TA value or $N_{TA\_offset\_UEspecific}$ and operate. For example, if "open loop TA" is configured/indicated to be enabled, a UE may use ($N_{TA,adj}^{common}$ and) $N_{TA,adj}^{UE}$ to calculate a total TA, whereas if "open loop TA" is configured/indicated to be disabled, a UE may not use ($N_{TA,adj}^{common}$ and) $N_{TA,adj}^{UE}$ to calculate a total TA. Here, a base station can configure/indicate $N_{TA,offset}$ as an appropriate default UE specific TA value or $N_{TA\_offset\_UEspecific}$. As a result, a UE can be configued/defined to interpret $N_{TA,offset}$ differently depending on specific cases (e.g., depending on whether open loop TA is enabled or disabled).

The proposed method can be configured/applied to other UL signals/channels such as a PUSCH/PUCCH/SRS. In addition, since examples of the proposed method described above can also be included as one of the implementation methods of the present disclosure, they can be considered as a kind of proposed methods. In addition, the proposed methods described above can be implemented independently, but can also be implemented in the form of a combination (or merge) of some of the proposed methods. Information on whether the proposed methods are applied (or information on rules of the proposed methods) can be notified by a base station to a UE through a predefined signal (e.g., a physical layer signal or a higher layer signal) (or, a rule can be defined to notify it). In the present disclosure, the higher layer can include, for example, one or more of functional layers such as MAC (medium access control), RLC (radio link control), PDCP (packet data convergence protocol), RRC (radio resource control), and SDAP (service data adaption protocol).

In the above proposed method, the entity transmitting a signal/channel including information for the default UE specific TA value may be an NTN gNB or TN gNB connected to a specific UE.

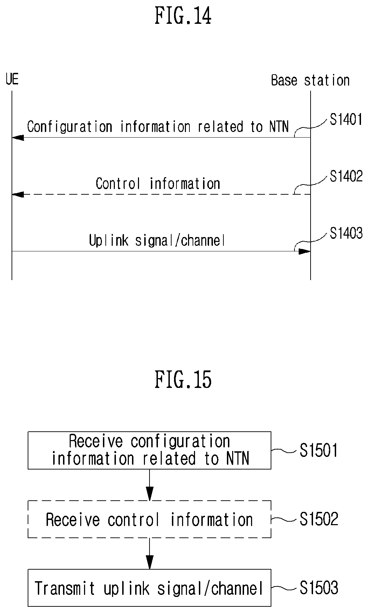

FIG. 14 illustrates a signaling method for an uplink transmission and reception method according to an embodiment of the present disclosure.

FIG. 14 illustrates signaling between a base station (e.g., TRP 1, TRP 2) and a UE to which the methods proposed in the present disclosure can be applied. Here, a UE/base station is only an example, and various devices can be applied instead. FIG. 14 is only for convenience of explanation, and does not limit the scope of the present disclosure. In addition, some of the steps illustrated in FIG. 14 may be omitted depending on the situation and/or settings.

Referring to FIG. 14, a UE receives configuration information related to an NTN from a base station (S1401).

Here, the base station may correspond to an NTN base station (e.g., a satellite) that serves an NTN cell, or may correspond to a TN base station (e.g., a gNB) that serves a TN cell.

Here, the configuration information related to the NTN may mean configuration information for providing a UE with information necessary for accessing the wireless communication system through a non-terrestrial network (NTN) including a satellite.

The configuration information may be transmitted via the higher layer signaling (e.g., SIB, RRC signaling, MAC-CE, etc.).

The configuration information may include first information for a UE-specific TA and second information for a common TA.

Here, for example, the first information may correspond to a UE-specific TA value (e.g., default UE specific TA) that a UE uses to calculate a $T_{TA}$, or may correspond to a new TA offset parameter (i.e., an offset parameter that is additionally provided to the existing $N_{TA,offset}$). In addition, for example, the second information for a common TA may include higher layer parameters TACommon, TACommonDrift and TACommonDriftVariation.

In addition, if the first information corresponds to a UE-specific TA value (e.g., default UE specific TA) that a UE uses to calculate a $T_{TA}$, a UE may not calculate a UE-specific TA value, and may use a UE-specific TA value given by the first information as it is.

In addition, if the first information corresponds to a UE-specific TA value (e.g., a default UE-specific TA) that a UE uses to calculate $T_{TA}$, a UE location for deriving the UE-specific TA value may be assumed to be a center of an NTN cell. That is, a base station may assume a UE location to be a center of the NTN cell, calculate the UE-specific TA value, and provide it to the UE as the first information.

In addition, if the first information corresponds to a UE specific TA value (e.g., a default UE specific TA) that a UE uses to calculate $T_{TA}$, the configuration information may not include (i.e., may not be provided to a UE) (serving) satellite ephemeris-related information/parameters (i.e., serving-satellite-ephemeris-related higher layer parameters). Alternatively, conversely, if the configuration information includes (serving) satellite ephemeris-related information/parameters (i.e., serving-satellite-ephemeris-related higher layer parameters), the configuration information may not include (i.e., may not be provided to a UE) the first information. That is, a base station may provide only one of the first information or the (serving) satellite ephemeris-related information/parameters to a UE.

Alternatively, even if the configuration information includes the first information, the configuration information may also include (serving) satellite ephemeris-related related information/parameters (i.e., serving-satellite-ephemeris-related upper layer parameters). In this case, a UE may determine the UE-specific TA value from prioritized information among the first information and the (serving) satellite ephemeris-related related information/parameters (i.e., serving-satellite-ephemeris-related higher layer parameters). Here, which information among the first information or the (serving) satellite ephemeris-related related information/parameters (i.e., serving-satellite-ephemeris-related upper layer parameters) corresponds to the prioritized information may be determined/defined in advance or may be configured by the base station. For example, based on the first information taking precedence over the (serving) satellite ephemeris-related information/parameters (i.e., serving-satellite-ephemeris-related higher layer parameters), the UE specific TA value given by the first information can be used to compute/derive $T_{TA}$.

In addition, if the first information corresponds to a UE-specific TA value (e.g., a default UE specific TA) that a UE uses to calculate $T_{TA}$, the UE-specific TA value (e.g., a default UE specific TA) is configured (i.e., a value is indicated) with a period longer than a transmission period of the configuration information, and the first information can indicate a difference value between the UE-specific TA value (e.g., the default UE specific TA) previously transmitted with a long period and the UE-specific TA value (e.g., the default UE specific TA) to be newly transmitted. For example, if the configuration information is transmitted with a period of 20 ms, the UE-specific TA value (e.g., the default UE specific TA) is transmitted with a period of 100 ms, and the first information can indicate a difference value (i.e., a difference value between the UE-specific TA value to be transmitted at that time (e.g., the default UE specific TA) and the previously transmitted UE-specific TA value (e.g., the default UE specific TA)) when the configuration information is transmitted. In this case, when the UE specific TA value (e.g., default UE specific TA) is transmitted rather than the difference value (i.e., the time when the configuration information is transmitted and the time when the UE specific TA value (e.g., default UE specific TA) is transmitted are the same), the first information may not be transmitted within the configuration information.

A UE may receive control information (i.e., downlink control information) for scheduling/triggering uplink transmission (i.e., uplink signal/channel, e.g., PRACH, PUSCH, PUCCH, SRS, etc.) from a base station (S1402).

Here, a base station may correspond to an NTN base station (e.g., satellite) serving an NTN cell, or may correspond to a TN base station (e.g., gNB) serving a TN cell.

Here, the control information may be transmitted via a PDCCH. In addition, if control information is not required for transmission of an uplink signal/channel (e.g., in the case of transmitting the first message for the random access procedure), this step may be omitted.

A UE transmits an uplink transmission (i.e., an uplink signal/channel, for example, PRACH, PUSCH, PUCCH, SRS, etc.) to a base station at a timing determined based on the TA value (S1403).

Here, a base station may correspond to an NTN base station (e.g., a satellite) serving an NTN cell.

Here, the TA value may be determined based on a UE-specific TA value determined by the first information and a common TA value derived from the second information. As described above, if the first information corresponds to a UE-specific TA value (e.g., a default UE specific TA) that the UE uses to calculate the $T_{TA}$, the UE may not calculate the UE-specific TA value and may use the UE-specific TA value given by the first information as it is.

Here, the uplink transmission may include a PUSCH/SRS/PUCCH/PRACH, etc. For example, in the case of a PUSCH, the control information may correspond to DCI for scheduling the PUSCH, in the case of an SRS, the control information may correspond to DCI for triggering transmission of the SRS (in the case of aperiodic SRS transmission), and in the case of a PUCCH, the control information may correspond to DCI for scheduling a PDSCH, for example.

In addition, when the uplink transmission corresponds to the first message transmission for a random access procedure, the control information transmission and reception step may be omitted.

In this case, the first message for the random access procedure may correspond to MSG1 (i.e., PRACH or a random access preamble transmitted on PRACH) and/or MSG3 (i.e., PDSCH scheduled by random access response UL grant) for the 4-step random access procedure (see FIG. 12), and may correspond to MSGA (i.e., PRACH and PUSCH carrying a random access preamble) for the 2-step random access procedure (see FIG. 13).

In addition, if the uplink transmission corresponds to the first message transmission for the random access procedure, a UE receives a second message for the random access procedure from a base station in response to the first message. Then, in the case of the 4-step random access procedure, the transmission and reception operations of MSG3 and MSG4 may be performed as exemplified in FIG. 12.

Here, the second message for the random access procedure may correspond to MSG2 (i.e., PDCCH, PDSCH for random access response) and/or MSG4 (i.e., PDSCH for contention resolution) in the case of the 4-step random access procedure (see FIG. 12), and may correspond to MSGB (i.e., PUSCH scheduled by the random access response UL grant and PDSCH for contention resolution) in the case of the 2-step random access procedure (see FIG. 13).

FIG. 15 is a diagram illustrating an operation of a UE for an uplink transmission and reception method according to an embodiment of the present disclosure.

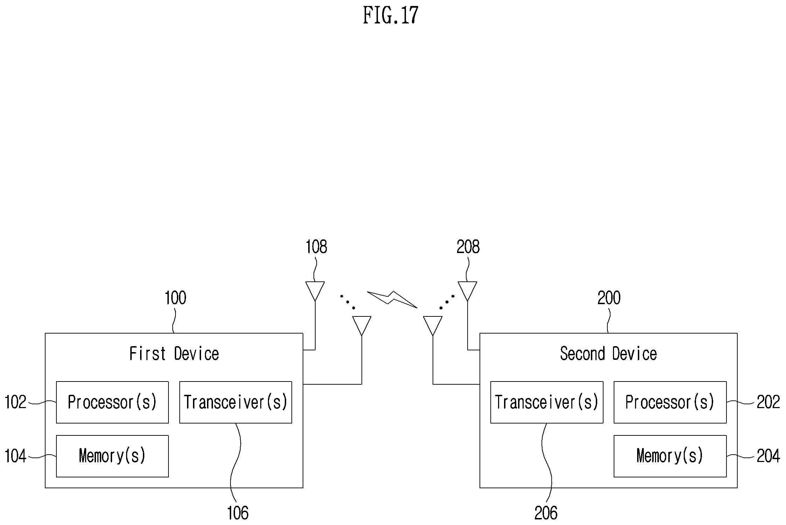

FIG. 15 illustrates an operation of a UE based on the proposed methods. The example of FIG. 15 is provided for convenience of explanation and does not limit the scope of the present disclosure. Some step(s) illustrated in FIG. 15 may be omitted depending on circumstances and/or settings. In addition, the UE in FIG. 15 is only an example and may be implemented as a device illustrated in FIG. 17 below. For example, the processor (102/202) of FIG. 15 may control the transceiver (106/206) to transmit and receive channels/signals/data/information, etc., and may also control the processor (102/202) of FIG. 15 to store transmitted or received channels/signals/data/information, etc. in the memory (104/204).

In addition, the operation of FIG. 15 may be processed by one or more processors (102, 202) of FIG. 17, and the operation of FIG. 15 may be stored in a memory (e.g., one or more memories (104, 204) of FIG. 17) in the form of a command/program (e.g., an instruction, an executable code) for driving at least one processor (e.g., 102, 202) of FIG. 17.

Referring to FIG. 15, a UE receives configuration information related to an NTN from a base station (S1501).

Here, the base station may correspond to an NTN base station (e.g., a satellite) that serves an NTN cell, or may correspond to a TN base station (e.g., a gNB) that serves a TN cell.

Here, the configuration information related to the NTN may mean configuration information for providing a UE with information necessary for accessing the wireless communication system through a non-terrestrial network (NTN) including a satellite.

The configuration information may be transmitted via the higher layer signaling (e.g., SIB, RRC signaling, MAC-CE, etc.).

The configuration information may include first information for a UE-specific TA and second information for a common TA.

Here, for example, the first information may correspond to a UE-specific TA value (e.g., default UE specific TA) that a UE uses to calculate a $T_{TA}$, or may correspond to a new TA offset parameter (i.e., an offset parameter that is additionally provided to the existing $N_{TA,offset}$). In addition, for example, the second information for a common TA may include higher layer parameters TACommon, TACommonDrift and TACommonDriftVariation.

In addition, if the first information corresponds to a UE-specific TA value (e.g., default UE specific TA) that a UE uses to calculate a $T_{TA}$, a UE may not calculate a UE-specific TA value, and may use a UE-specific TA value given by the first information as it is.

In addition, if the first information corresponds to a UE-specific TA value (e.g., a default UE-specific TA) that a UE uses to calculate $T_{TA}$, a UE location for deriving the UE-specific TA value may be assumed to be a center of an NTN cell. That is, a base station may assume a UE location to be a center of the NTN cell, calculate the UE-specific TA value, and provide it to the UE as the first information.

In addition, if the first information corresponds to a UE specific TA value (e.g., a default UE specific TA) that a UE uses to calculate $T_{TA}$, the configuration information may not include (i.e., may not be provided to a UE) (serving) satellite ephemeris-related information/parameters (i.e., serving-satellite-ephemeris-related higher layer parameters). Alternatively, conversely, if the configuration information includes (serving) satellite ephemeris-related information/parameters (i.e., serving-satellite-ephemeris-related higher layer parameters), the configuration information may not include (i.e., may not be provided to a UE) the first information. That is, a base station may provide only one of the first information or the (serving) satellite ephemeris-related information/parameters to a UE.

Alternatively, even if the configuration information includes the first information, the configuration information may also include (serving) satellite ephemeris-related related information/parameters (i.e., serving-satellite-ephemeris-related upper layer parameters). In this case, a UE may determine the UE-specific TA value from prioritized information among the first information and the (serving) satellite ephemeris-related related information/parameters (i.e., serving-satellite-ephemeris-related higher layer parameters). Here, which information among the first information or the (serving) satellite ephemeris-related related information/parameters (i.e., serving-satellite-ephemeris-related upper layer parameters) corresponds to the prioritized information may be determined/defined in advance or may be configured by the base station. For example, based on the first information taking precedence over the (serving) satellite ephemeris-related information/parameters (i.e., serving-satellite-ephemeris-related higher layer parameters), the UE specific TA value given by the first information can be used to compute/derive $T_{TA}$.

In addition, if the first information corresponds to a UE-specific TA value (e.g., a default UE specific TA) that a UE uses to calculate $T_{TA}$, the UE-specific TA value (e.g., a default UE specific TA) is configured (i.e., a value is indicated) with a period longer than a transmission period of the configuration information, and the first information can indicate a difference value between the UE-specific TA value (e.g., the default UE specific TA) previously transmitted with a long period and the UE-specific TA value (e.g., the default UE specific TA) to be newly transmitted. For example, if the configuration information is transmitted with a period of 20 ms, the UE-specific TA value (e.g., the default UE specific TA) is transmitted with a period of 100 ms, and the first information can indicate a difference value (i.e., a difference value between the UE-specific TA value to be transmitted at that time (e.g., the default UE specific TA) and the previously transmitted UE-specific TA value (e.g., the default UE specific TA)) when the configuration information is transmitted. In this case, when the UE specific TA value (e.g., default UE specific TA) is transmitted rather than the difference value (i.e., the time when the configuration information is transmitted and the time when the UE specific TA value (e.g., default UE specific TA) is transmitted are the same), the first information may not be transmitted within the configuration information.

A UE may receive control information (i.e., downlink control information) for scheduling/triggering uplink transmission (i.e., uplink signal/channel, e.g., PRACH, PUSCH, PUCCH, SRS, etc.) from a base station (S1502).

Here, a base station may correspond to an NTN base station (e.g., satellite) serving an NTN cell, or may correspond to a TN base station (e.g., gNB) serving a TN cell.

Here, the control information may be transmitted via a PDCCH. In addition, if control information is not required for transmission of an uplink signal/channel (e.g., in the case of transmitting the first message for the random access procedure), this step may be omitted.

A UE transmits an uplink transmission (i.e., an uplink signal/channel, for example, PRACH, PUSCH, PUCCH, SRS, etc.) to a base station at a timing determined based on a TA value (S1503).

Here, a base station may correspond to an NTN base station (e.g., a satellite) serving an NTN cell.

Here, the TA value may be determined based on a UE-specific TA value determined by the first information and a common TA value derived from the second information. As described above, if the first information corresponds to a UE-specific TA value (e.g., a default UE specific TA) that the UE uses to calculate the $T_{TA}$, the UE may not calculate the UE-specific TA value and may use the UE-specific TA value given by the first information as it is.

Here, the uplink transmission may include a PUSCH/SRS/PUCCH/PRACH, etc. For example, in the case of a PUSCH, the control information may correspond to DCI for scheduling the PUSCH, in the case of an SRS, the control information may correspond to DCI for triggering transmission of the SRS (in the case of aperiodic SRS transmission), and in the case of a PUCCH, the control information may correspond to DCI for scheduling a PDSCH, for example.

In addition, when the uplink transmission corresponds to the first message transmission for a random access procedure, the control information transmission and reception step may be omitted.

In this case, the first message for the random access procedure may correspond to MSG1 (i.e., PRACH or a random access preamble transmitted on PRACH) and/or MSG3 (i.e., PDSCH scheduled by random access response UL grant) for the 4-step random access procedure (see FIG. 12), and may correspond to MSGA (i.e., PRACH and PUSCH carrying a random access preamble) for the 2-step random access procedure (see FIG. 13).

In addition, if the uplink transmission corresponds to the first message transmission for the random access procedure, a UE receives a second message for the random access procedure from a base station in response to the first message. Then, in the case of the 4-step random access procedure, the transmission and reception operations of MSG3 and MSG4 may be performed as exemplified in FIG. 12.

Here, the second message for the random access procedure may correspond to MSG2 (i.e., PDCCH, PDSCH for random access response) and/or MSG4 (i.e., PDSCH for contention resolution) in the case of the 4-step random access procedure (see FIG. 12), and may correspond to MSGB (i.e., PUSCH scheduled by the random access response UL grant and PDSCH for contention resolution) in the case of the 2-step random access procedure (see FIG. 13).

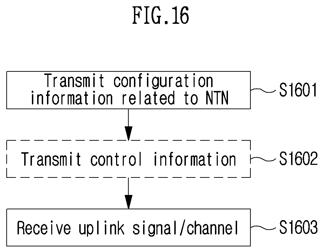

FIG. 16 is a diagram illustrating an operation of a base station for an uplink transmission and reception method according to an embodiment of the present disclosure.

FIG. 16 illustrates an operation of a base station based on the proposed methods. The example of FIG. 16 is provided for convenience of explanation and does not limit the scope of the present disclosure. Some step(s) illustrated in FIG. 16 may be omitted depending on circumstances and/or settings. In addition, the base station in FIG. 16 is only an example and may be implemented as a device illustrated in FIG. 17 below. For example, the processor (102/202) of FIG. 15 may control the transceiver (106/206) to transmit and receive channels/signals/data/information, etc., and may also control the processor (102/202) of FIG. 15 to store transmitted or received channels/signals/data/information, etc. in the memory (104/204).

In addition, the operation of FIG. 16 may be processed by one or more processors (102, 202) of FIG. 17, and the operation of FIG. 16 may be stored in a memory (e.g., one or more memories (104, 204) of FIG. 17) in the form of a command/program (e.g., an instruction, an executable code) for driving at least one processor (e.g., 102, 202) of FIG. 17.

Referring to FIG. 16, a base station transmits configuration information related to an NTN to a UE (S1601).

Here, the base station may correspond to an NTN base station (e.g., a satellite) that serves an NTN cell, or may correspond to a TN base station (e.g., a gNB) that serves a TN cell.

Here, the configuration information related to the NTN may mean configuration information for providing a UE with information necessary for accessing the wireless communication system through a non-terrestrial network (NTN) including a satellite.

The configuration information may be transmitted via the higher layer signaling (e.g., SIB, RRC signaling, MAC-CE, etc.) .

The configuration information may include first information for a UE-specific TA and second information for a common TA.

Here, for example, the first information may correspond to a UE-specific TA value (e.g., default UE specific TA) that a UE uses to calculate a $T_{TA}$, or may correspond to a new TA offset parameter (i.e., an offset parameter that is additionally provided to the existing $N_{TA,offset}$). In addition, for example, the second information for a common TA may include higher layer parameters TACommon, TACommonDrift and TACommonDriftVariation.

In addition, if the first information corresponds to a UE-specific TA value (e.g., default UE specific TA) that a UE uses to calculate a $T_{TA}$, a UE may not calculate a UE-specific TA value, and may use a UE-specific TA value given by the first information as it is.

In addition, if the first information corresponds to a UE-specific TA value (e.g., a default UE-specific TA) that a UE uses to calculate $T_{TA}$, a UE location for deriving the UE-specific TA value may be assumed to be a center of an NTN cell. That is, a base station may assume a UE location to be a center of the NTN cell, calculate the UE-specific TA value, and provide it to the UE as the first information.

In addition, if the first information corresponds to a UE specific TA value (e.g., a default UE specific TA) that a UE uses to calculate $T_{TA}$, the configuration information may not include (i.e., may not be provided to a UE) (serving) satellite ephemeris-related information/parameters (i.e., serving-satellite-ephemeris-related higher layer parameters). Alternatively, conversely, if the configuration information includes (serving) satellite ephemeris-related information/parameters (i.e., serving-satellite-ephemeris-related higher layer parameters), the configuration information may not include (i.e., may not be provided to a UE) the first information. That is, a base station may provide only one of the first information or the (serving) satellite ephemeris-related information/parameters to a UE.

Alternatively, even if the configuration information includes the first information, the configuration information may also include (serving) satellite ephemeris-related related information/parameters (i.e., serving-satellite-ephemeris-related upper layer parameters). In this case, a UE may determine the UE-specific TA value from prioritized information among the first information and the (serving) satellite ephemeris-related related information/parameters (i.e., serving-satellite-ephemeris-related higher layer parameters). Here, which information among the first information or the (serving) satellite ephemeris-related related information/parameters (i.e., serving-satellite-ephemeris-related upper layer parameters) corresponds to the prioritized information may be determined/defined in advance or may be configured by the base station. For example, based on the first information taking precedence over the (serving) satellite ephemeris-related information/parameters (i.e., serving-satellite-ephemeris-related higher layer parameters), the UE specific TA value given by the first information can be used to compute/derive $T_{TA}$.

In addition, if the first information corresponds to a UE-specific TA value (e.g., a default UE specific TA) that a UE uses to calculate $T_{TA}$, the UE-specific TA value (e.g., a default UE specific TA) is configured (i.e., a value is indicated) with a period longer than a transmission period of the configuration information, and the first information can indicate a difference value between the UE-specific TA value

(e.g., the default UE specific TA) previously transmitted with a long period and the UE-specific TA value (e.g., the default UE specific TA) to be newly transmitted. For example, if the configuration information is transmitted with a period of 20 ms, the UE-specific TA value (e.g., the default UE specific TA) is transmitted with a period of 100 ms, and the first information can indicate a difference value (i.e., a difference value between the UE-specific TA value to be transmitted at that time (e.g., the default UE specific TA) and the previously transmitted UE-specific TA value (e.g., the default UE specific TA)) when the configuration information is transmitted. In this case, when the UE specific TA value (e.g., default UE specific TA) is transmitted rather than the difference value (i.e., the time when the configuration information is transmitted and the time when the UE specific TA value (e.g., default UE specific TA) is transmitted are the same), the first information may not be transmitted within the configuration information.

A base station can transmit control information (i.e., downlink control information) to a UE for scheduling/triggering uplink transmission (i.e., uplink signal/channel, e.g., PRACH, PUSCH, PUCCH, SRS, etc.) (S1602).

Here, a base station may correspond to an NTN base station (e.g., satellite) serving an NTN cell, or may correspond to a TN base station (e.g., gNB) serving a TN cell.

Here, the control information may be transmitted via a PDCCH. In addition, if control information is not required for transmission of an uplink signal/channel (e.g., in the case of transmitting the first message for the random access procedure), this step may be omitted.

A base station receives an uplink transmission (i.e., an uplink signal/channel, e.g., PRACH, PUSCH, PUCCH, SRS, etc.) from a UE at a timing determined based on a TA value (S1603).

Here, a base station may correspond to an NTN base station (e.g., a satellite) serving an NTN cell.

Here, the TA value may be determined based on a UE-specific TA value determined by the first information and a common TA value derived from the second information. As described above, if the first information corresponds to a UE-specific TA value (e.g., a default UE specific TA) that the UE uses to calculate the $T_{TA}$, the UE may not calculate the UE-specific TA value and may use the UE-specific TA value given by the first information as it is.

Here, the uplink transmission may include a PUSCH/SRS/PUCCH/PRACH, etc. For example, in the case of a PUSCH, the control information may correspond to DCI for scheduling the PUSCH, in the case of an SRS, the control information may correspond to DCI for triggering transmission of the SRS (in the case of aperiodic SRS transmission), and in the case of a PUCCH, the control information may correspond to DCI for scheduling a PDSCH, for example.

In addition, when the uplink transmission corresponds to the first message transmission for a random access procedure, the control information transmission and reception step may be omitted.

In this case, the first message for the random access procedure may correspond to MSG1 (i.e., PRACH or a random access preamble transmitted on PRACH) and/or MSG3 (i.e., PDSCH scheduled by random access response UL grant) for the 4-step random access procedure (see FIG. 12), and may correspond to MSGA (i.e., PRACH and PUSCH carrying a random access preamble) for the 2-step random access procedure (see FIG. 13).

In addition, if the uplink transmission corresponds to the first message transmission for the random access procedure, a UE receives a second message for the random access procedure from a base station in response to the first message. Then, in the case of the 4-step random access procedure, the transmission and reception operations of MSG3 and MSG4 may be performed as exemplified in FIG. 12.

Here, the second message for the random access procedure may correspond to MSG2 (i.e., PDCCH, PDSCH for random access response) and/or MSG4 (i.e., PDSCH for contention resolution) in the case of the 4-step random access procedure (see FIG. 12), and may correspond to MSGB (i.e., PUSCH scheduled by the random access response UL grant and PDSCH for contention resolution) in the case of the 2-step random access procedure (see FIG. 13).

General Device to which the Present Disclosure may be applied

FIG. 17 is a diagram which illustrates a block diagram of a wireless communication device according to an embodiment of the present disclosure.

In reference to FIG. 17, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor (s). A memory or alternatively, nonvolatile memory device(s) in a memory include a non-transitory computer-readable storage medium. A feature described in the present disclosure may be stored in any one of machinereadable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Availability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method performed by a user equipment (UE) in a wireless communication system, the method comprising:

   receiving, from a base station, configuration information that provides information necessary for the UE to access the wireless communication system through a non-terrestrial network (NTN) including a satellite, wherein the configuration information includes first information for a UE-specific timing advance (TA) value and second information for a common TA;
   determining a TA value based on the UE-specific TA value given by the first information and a common TA value derived from the second information; and
   performing uplink transmission at a timing determined based on the TA value.

2. The method of claim 1, wherein the first information indicates a default value for the UE-specific TA value that is available without calculation by the UE.

3. The method of claim 2, wherein a UE location for deriving the default value for the UE-specific TA value is assumed to be a center of an NTN cell.

4. The method of claim 1, wherein based on the configuration information including the first information, the configuration information does not include serving-satellite-ephemeris-related information.

5. The method of claim 1, wherein the configuration information further includes serving-satellite-ephemeris-related information, and
   wherein based on the first information having priority over the serving-satellite-ephemeris-related information, the UE-specific TA value given by the first information is used to derive the TA value.

6. The method of claim 1, wherein which of the first information or the serving-satellite-ephemeris-related information corresponds to prioritized information is predetermined or configured by the base station.

7. The method of claim 1, wherein a default value for the UE-specific TA value is configured with a period longer than a transmission period of the configuration information, and
   wherein the first information indicates a difference value between a default value for a previously transmitted UE-specific TA value and a default value for a newly transmitted UE-specific TA value.

8. A user equipment (UE) operating in a wireless communication system, the UE comprising:

   at least one transceiver for transmitting and receiving a wireless signal; and
   at least one processor for controlling the at least one transceiver,
   wherein the at least one processor configured to:

      receive, from a base station, configuration information that provides information necessary for the UE to access the wireless communication system through a non-terrestrial network (NTN) including a satellite, wherein the configuration information includes first information for a UE-specific timing advance (TA) value and second information for a common TA;
      determine a TA value based on the UE-specific TA value given by the first information and a common TA value derived from the second information; and
      perform uplink transmission at a timing determined based on the TA value.

9. At least one non-transitory computer-readable medium storing at least one instruction, wherein the at least one instruction executable by at least one processor controls a user equipment (UE) to:

receive, from a base station, configuration information that provides information necessary for the UE to access the wireless communication system through a non-terrestrial network (NTN) including a satellite, wherein the configuration information includes first information for a UE-specific timing advance (TA) value and second information for a common TA;

determine a TA value based on the UE-specific TA value given by the first information and a common TA value derived from the second information; and

perform uplink transmission at a timing determined based on the TA value.

10. A processing apparatus configured to control a user equipment (UE) in a wireless communication system, the processing apparatus comprising:

at least one processor; and

at least one computer memory operably connected to the at least one processor and storing instructions that, based on being executed by the at least one processor, perform operations comprising:

receiving, from a base station, configuration information that provides information necessary for the UE to access the wireless communication system through a non-terrestrial network (NTN) including a satellite, wherein the configuration information includes first information for a UE-specific timing advance (TA) value and second information for a common TA;

determining a TA value based on the UE-specific TA value given by the first information and a common TA value derived from the second information; and

performing uplink transmission at a timing determined based on the TA value.

11. A method performed by a base station in a wireless communication system, the method comprising:

transmitting, to a user equipment (UE), configuration information that provides information necessary for the UE to access the wireless communication system through a non-terrestrial network (NTN) including a satellite, wherein the configuration information includes first information for a UE-specific timing advance (TA) value and second information for a common TA; and

receiving, from the UE, an uplink transmission at a timing determined based on a TA value, wherein the TA value is determined based on the UE-specific TA value given by the first information and a common TA value derived from the second information.

12. A base station operating in a wireless communication system, the base station comprising:

at least one transceiver for transmitting and receiving a wireless signal; and

at least one processor for controlling the at least one transceiver,

wherein the at least one processor configured to:

transmit, to a user equipment (UE), configuration information that provides information necessary for the UE to access the wireless communication system through a non-terrestrial network (NTN) including a satellite, wherein the configuration information includes first information for a UE-specific timing advance (TA) value and second information for a common TA; and

receive, from the UE, an uplink transmission at a timing determined based on a TA value, wherein the TA value is determined based on the UE-specific TA value given by the first information and a common TA value derived from the second information.

FIG.1

# FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

Size depends on subcarrier spacing

| 0 | 1 | 2 | 3 | 4 | 5 | 6 | 7 | 8 | 9 | 10 | 11 | 12 | 13 |

Mini-Slot
(URLLC)

Mini-Slot={2,4,7} Symbols

FIG.3

One Subframe

$14 \cdot 2^{\mu}$ OFDM Symbol

$k = N_{RB}^{\mu} N_{SC}^{RB} - 1$

Resource Block

Resource Element
- In a resource grid, $(k, \bar{l})$
- In a resource block, $(k, l)$

$N_{RB}^{\mu} N_{SC}^{RB} - 1$ Subcarrier

$N_{SC}^{RB}$ Subcarrier

$k = 0$

$l = 0$    $l = 14 \cdot 2^{\mu} - 1$

# FIG.4

# FIG.5

# FIG.6

EP 4 561 200 A1

INITIAL CELL
SEARCH

SYSTEM
INFORMATION
RECEPTION

RANDOM ACCESS PROCEDURE

GENERAL DL/UL Tx/Rx

PSS/SSS&
[DLRS]&
PBCH

PDCCH/
PDSCH
(BCCH)

PRACH

PDCCH/
PDSCH

PUSCH

PDCCH/
PDSCH

PDCCH/
PDSCH

PUSCH/
PUCCH

S601

S602

S603

S604

S605

S606

S607

S608

· DL/UL ACK/NACK
· UE CQI/PMI RI REPORT
  USING PUSCH AND PUCCH

EP 4 561 200 A1

FIG.7

Satellite
(or UAS platform)

Service
link

Feeder link

Data
network

Gateway

UE

Beam
footprint

FIG.8

Satellite
– T0 time point

Satellite
– T1 time point

Satellite
– T0 time point

Satellite
– T1 time point

(a)

(b)

FIG.9

K_offset = service link RTT + common TA

Common TA

RP

Feeder link RTT = common TA + K_mac

Service link

K_mac

## FIG.10

## FIG.11

FIG.12

(a)

(b)

FIG.13

UE              BS

MsgA

Random access preamble

PUSCH part

MsgB

(a)

UE              BS

Random access preamble allocation

MsgA

Random access preamble

PUSCH part

MsgB

(b)

# FIG.14

UE                                                    Base station

Configuration information related to NTN ⟋ S1401

Control information ⟋ S1402

Uplink signal/channel ⟋ S1403

# FIG.15

| Receive configuration information related to NTN | S1501 |

| Receive control information | S1502 |

| Transmit uplink signal/channel | S1503 |

FIG.16

| Transmit configuration<br>information related to NTN | ～S1601 |

| Transmit control information | ～S1602 |

| Receive uplink signal/channel | ～S1603 |

FIG.17

## INTERNATIONAL SEARCH REPORT

| International application No. |
|---|
| **PCT/KR2023/009415** |

**A. CLASSIFICATION OF SUBJECT MATTER**

**H04W 56/00**(2009.01)i; **H04W 74/00**(2009.01)i; **H04W 84/06**(2009.01)i

According to International Patent Classification (IPC) or to both national classification and IPC

**B. FIELDS SEARCHED**

Minimum documentation searched (classification system followed by classification symbols)

H04W 56/00(2009.01); G01S 1/00(2006.01); H04W 24/00(2009.01); H04W 52/02(2009.01); H04W 52/24(2009.01); H04W 72/04(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: NTN, UE 특정 타이밍 어드밴스(UE-specific TA), 공통 TA(common TA), TA 값 (TA value), 상향링크(uplink)

**C. DOCUMENTS CONSIDERED TO BE RELEVANT**

| Category* | Citation of document, with indication, where appropriate, of the relevant passages | Relevant to claim No. |
|---|---|---|
| X | WO 2022-082662 A1 (APPLE INC.) 28 April 2022 (2022-04-28)<br>See paragraphs [0044]-[0052]; claims 1 and 13; and figure 3. | 1,5,8-12 |
| A | | 2-4,6-7 |
| A | KR 10-2014-0054261 A (SAMSUNG ELECTRONICS CO., LTD.) 08 May 2014 (2014-05-08)<br>See paragraphs [0076]-[0162]; and figures 3a-3c. | 1-12 |
| A | US 2012-0250520 A1 (CHEN, Yih-Shen et al.) 04 October 2012 (2012-10-04)<br>See paragraphs [0049]-[0050]; and figures 12-13. | 1-12 |
| A | KR 10-2021-0128917 A (ELECTRONICS AND TELECOMMUNICATIONS RESEARCH INSTITUTE) 27 October 2021 (2021-10-27)<br>See paragraphs [0041]-[0062]; and figures 1-2. | 1-12 |

☑ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **12 October 2023** | **12 October 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/009415** |

### C. DOCUMENTS CONSIDERED TO BE RELEVANT

| Category* | Citation of document, with indication, where appropriate, of the relevant passages | Relevant to claim No. |
| --- | --- | --- |
| A | WO 2021-098066 A1 (ZTE CORPORATION) 27 May 2021 (2021-05-27)<br>See claims 1-11. | 1-12 |

**INTERNATIONAL SEARCH REPORT**
Information on patent family members

International application No.

**PCT/KR2023/009415**

| Patent document cited in search report | | | Publication date (day/month/year) | Patent family member(s) | | | Publication date (day/month/year) |
|---|---|---|---|---|---|---|---|
| WO | 2022-082662 | A1 | 28 April 2022 | CN | 116349379 | A | 27 June 2023 |
| | | | | EP | 4211945 | A1 | 19 July 2023 |
| | | | | KR | 10-2023-0074222 | A | 26 May 2023 |
| KR | 10-2014-0054261 | A | 08 May 2014 | EP | 2745580 | A2 | 25 June 2014 |
| | | | | EP | 2745580 | B1 | 28 April 2021 |
| | | | | US | 2013-0044665 | A1 | 21 February 2013 |
| | | | | US | 9007973 | B2 | 14 April 2015 |
| | | | | WO | 2013-025068 | A2 | 21 February 2013 |
| | | | | WO | 2013-025068 | A3 | 16 May 2013 |
| US | 2012-0250520 | A1 | 04 October 2012 | CN | 102860120 | A | 02 January 2013 |
| | | | | CN | 102860120 | B | 05 August 2015 |
| | | | | EP | 2596675 | A1 | 29 May 2013 |
| | | | | JP | 2014-510457 | A | 24 April 2014 |
| | | | | JP | 2015-029320 | A | 12 February 2015 |
| | | | | JP | 5642299 | B2 | 17 December 2014 |
| | | | | TW | 201304592 | A | 16 January 2013 |
| | | | | TW | I459847 | B | 01 November 2014 |
| | | | | US | 9467959 | B2 | 11 October 2016 |
| | | | | WO | 2012-130173 | A1 | 04 October 2012 |
| KR | 10-2021-0128917 | A | 27 October 2021 | US | 11678284 | B2 | 13 June 2023 |
| | | | | US | 2021-0329580 | A1 | 21 October 2021 |
| WO | 2021-098066 | A1 | 27 May 2021 | CN | 115066942 | A | 16 September 2022 |
| | | | | EP | 4108021 | A1 | 28 December 2022 |
| | | | | EP | 4108021 | A4 | 29 March 2023 |
| | | | | JP | 2023-513416 | A | 31 March 2023 |
| | | | | KR | 10-2022-0106154 | A | 28 July 2022 |
| | | | | US | 2022-0322265 | A1 | 06 October 2022 |

Form PCT/ISA/210 (patent family annex) (July 2022)